# EUROPEAN PATENT SPECIFICATION

(11) **EP 2 446 168 B1**
(45) Date of publication and mention of the grant of the patent: **05.03.2014**
(21) Application number: 10730405.7
(22) Date of filing: 22.06.2010
(51) Int. Cl.: F16F 9/46

(54) **PRESSURE REGULATOR COMPRISING AN ACTUATOR**
DRUCKREGLER MIT EINEM BETÄTIGER
RÉGULATEUR DE PRESSION COMPRENANT UN ACTIONNEUR

(30) Priority: 25.06.2009 SE 0900870
(43) Date of publication of application: 02.05.2012
(73) Proprietor: ÖHLINS RACING AB, 194 27 Upplands Väsby (SE)
(72) Inventor: HOVÉN, Arnold, S-554 58 Jönköping (SE); SÖNSTERÖD, Lars, S-518 33 Sandared (SE)
(74) Representative: Loqvist, Gabriel Mathias
(86) International application number: PCT/EP2010/058809
(87) International publication number: WO 2010/149652

(56) References cited:
- EP-A1- 0 608 427
- EP-A2- 1 914 442
- WO-A1-2009/157841
- SE-L- 0 701 748
- US-A- 5 937 975

## Description

### Technical field

The invention relates to an electrically controlled pressure regulator, which comprises an actuator in the form of a solenoid primarily intended to determine the pressure in a damping medium flow between the damping chambers of a shock absorber.

### Background of the invention

A known design within the field of the invention is described by patent SE531108 of the Applicant, in which the closing actuating force of a pilot stage in a shock absorber valve is determined by the force from an electrically controlled solenoid.

In this patent application is described a valve/pressure regulator in the form of a pilot-controlled two-stage valve, intended to control a damping medium flow between the two damping chambers of a hydraulic shock absorber. The shock absorber valve comprises a valve housing having at least one main valve with a movable valve part in the form of a main cone disposed between a main valve spring arrangement and a seat, as well as a pilot valve comprising a pilot slide. The main cone delimits a pilot chamber in the valve housing, in which the valve main spring and the pilot slide are disposed. The characteristics of the shock absorber valve are primarily controlled by the pressure build-up in the pilot chamber, which is adjusted by the position of the pilot slide in the pilot chamber. The position is determined by the force balance between the spring force of a pilot spring and the counter actuating force from an electrically controlled solenoid, but also by the feedback pressure opening force created by the pressure in the pilot chamber. Energization of the solenoid adjusts the position of a driver or a solenoid armature having a solenoid armature rod disposed inside a solenoid chamber in the solenoid. The solenoid chamber is pressurized by virtue of the fact that a longitudinal and a transverse hole run in the solenoid armature rod and connect the pilot chamber to the solenoid chamber. As a result of different diameters of the upper and lower part of the pilot slide, a certain damping of the movement of the pilot slide is created.

The pressurization of the solenoid chamber causes damping medium to flow through the solenoid, which thus can become more sensitive to dirt. Precise tolerances between the solenoid armature rod and the valve housing are therefore required to enable dirt insensitivity to be attained. This can lead to high production costs and a certain undesirable friction.

Another pressure regulator according to the preamble of claim 1 can be seen in the EP 0 608 427.

### Object of the invention

The present invention aims to reduce the friction and the production costs in a pressure regulator regulated by a solenoid.

The invention also aims to create a pressure regulator having a robust construction, which is relatively insensitive to tolerances.

The invention further sets out to create a pressure regulator having minimized sensitivity to fouling.

### Summary of the invention

The pressure regulator according to the invention adjusts the pressure in a hydraulic flow between a first and a second chamber. The pressure is partially or wholly regulated by an energization of a solenoid which adjusts a position of a driver. The driver comprises a solenoid armature arranged around or integrated with a solenoid armature rod and is axially displaceable inside a solenoid chamber in a housing. The solenoid chamber is pressurized with a solenoid chamber pressure by virtue of the fact that one or more holes in the solenoid armature rod connect the first chamber to the solenoid chamber. The invention is characterized by the details described in Claim 1.

The invention is described in greater detail below, the references to the appended drawings.

### List of figures

Fig. 1 shows the pressure regulator connected to a shock absorber.
Fig. 2 shows a detailed view of those parts of the pressure regulator which are movable in relation to one another and between which a hydraulic flow can pass.
Fig. 3a shows a first embodiment of the solenoid-controlled driver of the pressure regulator.
Fig. 3b shows a second embodiment of the solenoid-controlled driver of the pressure regulator.
Fig. 3c shows a detailed view of a third embodiment of the solenoid-controlled driver of the pressure regulator.

### Detailed description of the invention

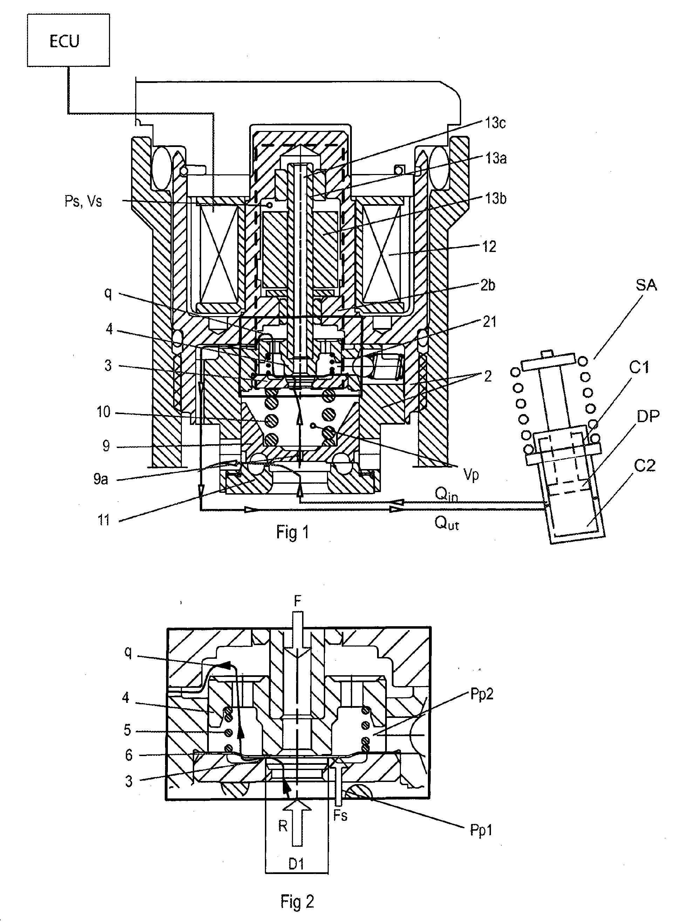

Figure 1 shows a shock absorber valve connected to a hydraulic shock absorber SA for a vehicle in which the valve controls the pressure in a damping medium flow Qᵢₙ, Qₒᵤₜ into, out of or between the two damping chambers C1, C2 of the shock absorber. The flow between the two damping chambers occurs through displacement of a main piston DP which is disposed in the damper body and delimits the two damping chambers C1, C2. The flow of the damping medium in the valve is primarily determined by the speed of the main piston DP and by the piston and piston rod diameters thereof. The valve is a one-way valve, in which the flow Qᵢₙ goes into the valve and the flow Qₒᵤₜ goes out of the valve, i.e. the damping medium flow takes the same path and flows in a direction irrespective of the direction in which the main piston DP moves in the damper body. The pressure is adjusted via an ECU-controlled continuous electric signal, which controls the current supply to the valve according to working principles described in EP 0 942 195.

The shock absorber valve in Figure 1 includes a valve housing 2 comprising at least one main valve having an axially movable main cone 9. The main cone 9 is biased by a main valve spring 10 against a main seat 11. The main cone 9 is also arranged such that it delimits a pilot chamber Vₚ in the valve housing 2. In the pilot chamber Vₚ are disposed the main valve spring 10, and a pilot valve cone 4 and a pilot valve seat 3.

The main flow Qᵢₙ creates a pressure on the main cone 9 which contributes to a regulator force R that opens the valve, i.e. forces the main cone 9 from the main seat 11. Once the valve has opened, the main flow goes via the regulatable flow opening which arises between the main seat 11 and the main cone 9 in the direction Qᵢₙ to Qₒᵤₜ, or in through a hole 9a in the main cone 9 into the pilot chamber Vₚ. The valve is preferably a two-stage, pilot-controlled valve, which means that the force which opens the main valve is dependent on the pilot pressure Pₚ which arises in the pilot chamber Vₚ.

The characteristics of the shock absorber valve are thus mainly controlled by a pressure regulator which adjusts a hydraulic flow between a first chamber Vₚ₁ and a second chamber Vₚ₂. The flow between the chambers is regulated partially or wholly by energization of a solenoid, which adjusts an axial position of a driver in relation to a housing. The driver per se is connected to and adjusts the position of an axially movable cone in relation to a seat.

In this case, the pressure regulator adjusts the pressure in a pilot chamber Vₚ, i.e. the flow between the first and the second pilot valve chamber Vₚ₁, Vₚ₂, by adjusting the position of a pilot valve cone 4 in relation to a pilot valve seat 3, see Figure 2.

The mutual relationship of the pilot valve cone 4 and the pilot valve seat 3 creates a regulatable flow opening arranged to restrict a pilot damping medium flow q. The regulatable flow opening, which has a flow diameter defined by the measure D1, creates a restriction of the flow q which produces a pressure difference between the pressures Pₚ₁, Pₚ₂ which arises upstream and downstream respectively of the restriction. This pressure difference can be close to 10 bar. The size of the flow opening and the position of the pilot valve cone 4 in the pilot chamber Vₚ are determined by a force balance on the pilot valve cone 4. The force balance is primarily created by the sum of an actuating force F and the force Fs from a spring arrangement against the action of the regulator force R created by the main flow Qᵢₙ. The spring arrangement comprises, for example, a first and/or a second spring 5, 6, which can be configured as helical springs and/or washer-shaped shim springs. In Figures 1 and 2, the first spring 5 is a helical spring and the second spring 6 is a shim spring.

The actuating force F is created by an electrically controlled solenoid 12 arranged to regulate the position of the pilot valve cone 4 in relation to the pilot valve seat 3 via a driver 13 which is axially movable in the valve housing 2 and comprises a solenoid armature rod 13a and a solenoid armature body 13b.

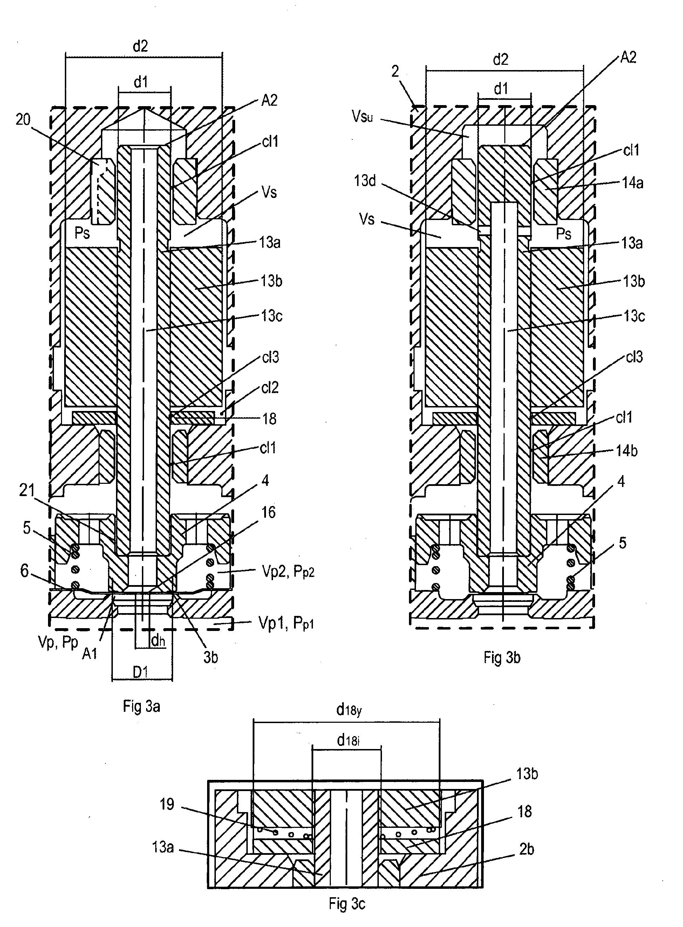

In Figure 3a and 3b is shown an enlarged view of the driver 13 and its parts. The solenoid armature rod 13a has a diameter d1 which is smaller than the diameter d2 of the solenoid armature body 13b. When the solenoid armature rod 13a is axially displaced, it slides against an upper and a lower plain bearing 14a, 14b disposed in the valve housing 2. Between the plain bearings 14a, 14b and the rod 13a there is, for production engineering reasons (i.e., from a manufacturing point of view), a first clearance cl1 of a predetermined size. The size of this first clearance cl1 contributes, inter alia, to a reduced friction and helps to possibly reduce the tolerance requirements of the solenoid armature rod 13a and the valve housing 2.

In Figure 3a, a hole 13c extends, parallel with the axis of symmetry of the rod 13a, through the whole of the solenoid armature rod 13a. Through this hole 13c, damping medium can pass to a solenoid chamber Vₛ which is disposed in the valve housing 2 within the interior of the solenoid 12. The damping medium flows through the hole 13c, so that the solenoid chamber Vₛ is pressurized with a solenoid chamber pressure Pₛ. Due to a large diameter of the hole 13c, the restriction of the damping medium flow between the pilot chamber Vₚ and the solenoid chamber Vₛ is sufficiently small that the solenoid chamber pressure Pₛ is substantially as great as the pilot pressure Pₚ.

If a shim spring is used as the second spring 6, as shown in Figures 1, 2 and 3a, can be disposed a hole 16 of diameter dₕ in the centre thereof, which hole ensures that damping medium can flow through the axial hole 13c in the solenoid armature rod 13a with little or no restriction. A small restriction results in a certain damping of the movements of the driver 13.

The size of the actuating force F which acts counter to the total force Fs of the spring arrangement is limited for, for example, flow limitation and spatial reasons, i.e. the solenoid design. That is to say, the difference between the forces Fs from the spring arrangement and the actuating force F limits how high the pilot pressure Pₚ can be. In order to increase the maximum level of the pilot pressure, the area, referred to as the total pressure feedback area A, which is acted upon by the pilot pressure is reduced. The total feedback area A is determined by the difference between a first and a second area; A1-A2. A1 is the effective first area of diameter D1 which is acted upon by the pilot pressure Pp, in this case determined by the seat diameter D1 of the regulatable flow opening which restricts the pilot damping medium flow q. A2 is the effective second area, determined by the diameter d1 of the solenoid rod 13a, which is acted upon by the solenoid chamber pressure Pₛ. Around other parts disposed in the solenoid chamber, substantially the same pressure Pₛ prevails, which means that they do not contribute to any change in static force. Thus A=pi*(D1²-d1²)/4.

The pressure feedback area A does not have any lower size limit, since the diameters for the respective effective area can be freely chosen, nor is there theoretically any upper limit for the height to which the pilot pressure Pₚ can be adjusted. Preferably, only the seat diameter D1 defined by the inner seat edge 3b is used to determine the pressure feedback area. To be able to choose a large number of pressure ranges merely by the choice of one dimension of a component has great significance for the production costs. The pressure feedback is possible by virtue of the hydraulic connection of the pilot chamber Vp and the solenoid chamber Vs via the hole 13c in the solenoid armature rod 13a. In order to increase this pressure feedback or differential feedback, as it may also be called, a groove 20 can be disposed in the upper plain bearing 14a. The groove offers greater possibilities for the hydraulic medium to flow from the pilot to the solenoid chamber without restriction. The groove 20 is shown with a dashed line in Figure 3a.

A delimiting part in the form of a washer 18 is arranged around the solenoid armature rod 13a adjacent to the valve housing 2. The washer 18 has a suitably small third clearance cl3 between its inner diameter d₁₈ᵢ and the solenoid armature rod 13a, and a second, larger clearance cl2 between its outer diameter d_{18y} and the housing 2. The second clearance cl2 corresponds to or is larger than the first clearance cl1 between the solenoid armature rod 13a and the valve housing 2, preferably up to three times larger, but this relationship can vary. As a result of this relationship between the clearances, a certain radial movement is permitted between the driver and the housing 2. Moreover, a play 21 is also permitted between the solenoid armature rod 13a and the pilot valve cone 4, which results in no transfer of lateral forces from the solenoid to the valve housing 2.

The third clearance cl3 is as small as possible from a production engineering aspect and preferably has a size of between a maximum clearance of 6/1000 and a minimum clearance of 1/1000 of the outer diameter d1 of the solenoid rod, i.e. a fit between the outer diameter d1 of the solenoid rod and the housing 2 which is between H7/g6 and optimally H6/g5, maximally H6/f5. As a result of having a minimal third clearance cl3 between the inner diameter of the washer 18 and the solenoid armature rod 13a, very little damping medium flows through the hole 13c in the solenoid armature rod 13a, via the solenoid chamber Vs and to the downstream pilot chamber Vp2. A small clearance cl3 is demanded due to the requirement of low leakage through the inner, dirt-sensitive parts of the solenoid.

The washer 18 bears against the valve housing 12 adjacent to the lower plain bearing 14b. The contact surface between the valve housing 2 and the washer 18 is kept shut and seals, regardless of the operating situation. This by virtue of the fact that the oil works with a sticking force, at the same time as the washer 18 is acted upon by the solenoid chamber pressure Pₛ, which compresses the washer 18 against the valve housing 2. The pressing force is created by a pressure difference over the washer 18, which arises by virtue of the fact that the second pilot pressure Pₚ₂, downstream of the restriction between the pilot valve seat 3 and the pilot valve cone 4, is significantly less than the solenoid chamber pressure Pₛ, which is substantially equal to the first pilot pressure Pₚ₁.

In Figure 3b is shown an alternative embodiment in which the axially extending hole 13c through the solenoid armature rod 13a is no longer continuous, but is terminated such that a second part of the solenoid armature rod having the upper area A2 and diameter d1 is solid. The hole 13c thus extends only through a first part of the solenoid armature rod 13a. In order to lead damping medium into the solenoid chamber Vs and still create a pressure-balanced solenoid armature 13b, the axial hole 13c is terminated in radial holes 13d extending between the hole 13c in the solenoid armature rod and the solenoid chamber Vₛ. In this embodiment, the solenoid armature rod 13a operates as an extra damping piston in the limited space in the form of an upper solenoid chamber Vsᵤ disposed above the solenoid armature rod 13a. The damping is created by virtue of the fact that the damping medium in the upper solenoid chamber Vsᵤ which is dispelled by the solenoid armature rod 13a, is forced to flow through the first gap cl1 and out into the solenoid chamber Vs.

In addition, in this Figure 3b, the spring arrangement which creates the spring force Fₛ is replaced by a single helical spring 5. Of course, also the spring arrangement which is shown in Figures 1-3a can also be used in this embodiment. The hole 16 in the second shim spring 6 then creates an extra damping in series with the damping movement of the solenoid armature rod in the space Vsᵤ.

A further pressing pressure can be created by the arrangement of a spring 19, see Figure 3c, between the washer 18 and the solenoid armature body 13b. The spring 19 works with low force, which is always somewhat greater than the own weight of the washer 18, and with low spring constant, in order not to otherwise affect the valve function. The spring 19 is either configured as a helical spring 19 - straight or conically or as a shim spring/cup spring with bent-up arms. Another alternative is that the washer 18 itself both seals and is springy and can then have a shim-like character, preferably in the form of a thin washer with bent-up arms.

The invention is not limited to the embodiment which is shown above by way of example, but instead can be modified within the scope of the following patent claims and the inventive concept. For example, the solenoid-controlled pressure regulator can, of course, be used in controlling other than pilot pressure in a shock absorber valve and can also be used in other types of valves, such as various types of one-way or non-return valves biased by springs.

## Claims

1. A pressure regulator for adjusting the pressure in a hydraulic flow between a first and a second chamber (Vp1, Vp2), wherein the pressure is partially or wholly regulated by an energization of a solenoid which adjusts a position of a driver, the said driver comprising a solenoid armature (13b) arranged around or integrated with a solenoid armature rod (13a) and being axially displaceable inside a solenoid chamber (Vs) in a housing (2), wherein the solenoid chamber (Vs) is pressurized with a solenoid chamber pressure (Ps) by virtue of the fact that one or more holes (13c) in the solenoid armature rod (13a) connect the first chamber (Vp1) to the solenoid chamber (Vs), **characterized in that** a delimiting part (18) is arranged around the solenoid armature rod (13a) adjacent to the housing (2), and wherein the delimiting part (18) has a third clearance (cl3) between its inner diameter (d₁₈ᵢ) and the outer diameter (d1) of the solenoid armature rod, and a second clearance (cl2), larger than the third clearance (cl3), between its outer diameter (d_{18y}) and the housing (2), wherein the second clearance (cl2) corresponds to or is larger than a first clearance (cl1) between the outer diameter (d1) of the solenoid armature rod (13a) and the housing (2), so that a certain radial movement is permitted between the driver and the housing (2), at the same time as very little damping medium flows between the delimiting part (18) and the solenoid armature rod (13a), and **in that** the solenoid chamber pressure (Pₛ) in the solenoid chamber (Vₛ) is substantially equal to a first pressure (Pₚ₁) prevailing in the first chamber (Vₚ₁), by virtue of the fact that the said one or more holes (13c) which are disposed in the solenoid armature rod (13a) and connect the chambers (Vₚ₁, Vₛ) have a diameter which enables a substantially undisturbed hydraulic flow between the chambers.

2. A pressure regulator according to Claim 1, further comprising an axially movable cone (4) and a seat (3), wherein said driver is connected to and adjusts the position of said cone (4) in relation to said seat (3).

3. A pressure regulator according to Claim 2, wherein a play (21) is permitted between the solenoid armature rod (13a) of said driver and the cone (4), which results in no transfer of lateral forces from the solenoid to the valve housing (2).

4. A pressure regulator according to Claim 2 or 3, further comprising a shim spring (6) arranged between said cone (4) and said seat (3), wherein a hole (16) of diameter dₕ is disposed in the centre of said shim spring (6), which hole ensures that damping medium can flow through the axial hole (13c) in the solenoid armature rod (13a) with little or no restriction.

5. A pressure regulator according to any one of the preceding claims, **characterized in that** the third clearance (cl3) is as small as possible from a manufacturing point of view and preferably has a size of between a maximum clearance of 6/1000 and a minimum clearance of 1/1000 of the outer diameter (d1) of the solenoid rod (13a).

6. A pressure regulator according to any one of the preceding claims, **characterized in that** the delimiting part (18) bears against the housing (2) and the contact surface between the housing (2) and the delimiting part (18) is kept shut and seals, regardless of the operating situation, by virtue of the fact that a solenoid chamber pressure (Ps) acts in the solenoid chamber (Vs) and creates a force which presses the delimiting part (18) against the housing (2).

7. A pressure regulator according to Claim 6, **characterized in that** the pressing force on the delimiting part (18) is created by a pressure difference over the delimiting part (18), which arises by virtue of the fact that a second pressure (Pₚ₂) in the second chamber (Vₚ₂) is significantly less than the solenoid chamber pressure (Pₛ).

8. A pressure regulator according to Claim 7, **characterized in that** a further pressing pressure can be created by the arrangement of a spring (19) between the delimiting part (18) and the solenoid armature body (13b).

9. A pressure regulator according to any one of the preceding claims, **characterized in that** the connection of the solenoid chamber (Vₛ) and the first chamber (Vₚ₁) is realized by an axial hole (13c) extending through the whole of the solenoid armature rod (13a).

10. A pressure regulator according to any one of the preceding claims, **characterized in that** the connection of the solenoid chamber (Vₛ) and the first chamber (Vₚ₁) is realized by an axial hole (13c) extending only through a first part of the solenoid armature rod (13a), so that a second part of the solenoid armature rod (13a) remains solid, and wherein the axial hole (13c) is terminated in radial holes (13d) extending between the hole (13c) in the solenoid armature rod (13a) and the solenoid chamber (Vₛ).

11. A pressure regulator according to Claim 10, **characterized in that** the second, solid part of the solenoid armature rod (13a) is arranged to move in a limited space in the form of an upper solenoid chamber (Vₛᵤ) above the solenoid armature rod (13a) and divided off from the solenoid chamber (Vₛ) by the housing (2), so that a damping of the solenoid armature rod movement is achieved.

12. A pressure regulator according to Claim 11, **characterized in that** the upper solenoid chamber (Vₛᵤ) is connected to the solenoid chamber (Vₛ) via the first gap (Cl1) between the solenoid armature rod (13a) and the housing (2).

13. A pressure regulator according to Claim 12, **characterized in that** the damping of the solenoid armature rod movement is achieved by virtue of the fact that the hydraulic medium which is dispelled by the solenoid armature rod (13a) is forced to flow through the first gap (cl1) and out into the solenoid chamber (Vs).

14. A pressure regulator according to any one of Claims 1-13, **characterized in that** the pressure regulator regulates a pilot pressure (Pₚ) which determines a main damping medium flow over a main valve in a shock absorber valve.

15. A pressure regulator according to Claim 14, **characterized in that** the main valve comprises a main cone (9), which is arranged to move axially in relation to a main seat (11) counter to the action of at least a first main valve spring (10a) and the pilot pressure (Pₚ) determined by the pressure regulator.

## Patentansprüche

1. Druckregler für das Einstellen des Drucks in einem Hydraulikstrom zwischen einer ersten und einer zweiten Kammer (Vp1, Vp2), wobei der Druck teilweise oder vollständig durch Erregen eines Magneten geregelt wird, der eine Position eines Treibers einstellt, wobei der Treiber einen Magnetanker (13b) umfasst, der um eine Magnetankerstange (13a) herum angeordnet oder mit dieser zusammengeschlossen ist und innerhalb einer Magnetkammer (Vs) in einem Gehäuse (2) axial verlagert werden kann, wobei die Magnetkammer (Vs) infolge der Tatsache, dass eine oder mehrere Öffnungen (13c) in der Magnetankerstange (13a) die erste Kammer (Vp1) mit der Magnetkammer (Vs) verbinden, mit einem Magnetkammerdruck (Ps) beaufschlagt wird, **dadurch gekennzeichnet, dass** um die Magnetankerstange (13a) herum, angrenzend an das Gehäuse (2), ein Beschränkungsteil (18) angeordnet ist, wobei das Beschränkungsteil (18) einen dritten Freiraum (cl3) zwischen seinem Innendurchmesser (d₁₈ᵢ) und dem Außendurchmesser (d1) der Magnetankerstange und einen zweiten Freiraum (cl2), größer als der dritte Freiraum (cl3), zwischen seinem Außendurchmesser (d_{18y}) und dem Gehäuse (2) aufweist, wobei der zweite Freiraum (cl2) einem ersten Freiraum (cl1) zwischen dem Außendurchmesser (d1) der Magnetankerstange (13a) und dem Gehäuse (2) entspricht oder größer als dieser ist, so dass zwischen dem Treiber und dem Gehäuse (2) eine gewisse radiale Bewegung ermöglicht ist, wobei gleichzeitig sehr wenig Dämpfungsmittel zwischen dem Beschränkungsteil (18) und der Magnetankerstange (13a) strömt, und dadurch, dass der Magnetkammerdruck (Pₛ) in der Magnetkammer (Vₛ) infolge der Tatsache, dass die eine oder mehreren Öffnungen (13c), die in der Magnetankerstange (13a) angeordnet sind und die Kammern (Vₚ₁, Vₛ) verbinden, einen Durchmesser aufweisen, der einen im Wesentlichen ungestörten Hydraulikstrom zwischen den Kammern ermöglicht, im Wesentlichen gleich einem ersten Druck (Pₚ₁) ist, der in der ersten Kammer (Vₚ₁) herrscht.

2. Druckregler nach Anspruch 1, ferner einen axial beweglichen Innenring (4) und einen Sitz (3) umfassend, wobei der Treiber mit dem Innenring (4) verbunden ist und dessen Position im Verhältnis zum Sitz (3) einstellt.

3. Druckregler nach Anspruch 2, wobei zwischen der Magnetankerstange (13a) des Treibers und dem Innenring (4) ein Spiel (21) ermöglicht ist, wodurch keine seitlichen Kräfte vom Magneten auf das Ventilgehäuse (2) übertragen werden.

4. Druckregler nach Anspruch 2 oder 3, ferner einen Federeinstellring (6) umfassend, der zwischen dem Innenring (4) und dem Sitz (3) angeordnet ist, wobei in der Mitte des Federeinstellringes (6) eine Öffnung (16) mit einem Durchmesser dₕ angeordnet ist, die sicherstellt, dass Dämpfungsmedium mit geringer oder gar keiner Drosselung durch die Axialöffnung (13c) in der Magnetankerstange (13a) strömen kann.

5. Druckregler nach einem der vorhergehenden Ansprüche, **dadurch gekennzeichnet, dass** der dritte Freiraum (cl3) vom Herstellungsstandpunkt aus so klein wie möglich ist und vorzugsweise eine Größe zwischen einem Maximalfreiraum von 6/1000 und einem Minimalfreiraum von 1/1000 des Außendurchmessers (d1) der Magnetankerstange (13a) aufweist.

6. Druckregler nach einem der vorhergehenden Ansprüche, **dadurch gekennzeichnet, dass** das Beschränkungsteil (18) am Gehäuse (2) anliegt und die Kontaktfläche zwischen dem Gehäuse (2) und dem Beschränkungsteil (18), ungeachtet des Betriebszustandes, infolge der Tatsache, dass ein Magnetkammerdruck (Ps) in der Magnetkammer (Vs) wirkt und eine Kraft erzeugt, die das Beschränkungsteil (18) gegen das Gehäuse (2) drückt, geschlossen und dicht gehalten wird.

7. Druckregler nach Anspruch 6, **dadurch gekennzeichnet, dass** die Druckkraft auf das Beschränkungsteil (18) durch einen Druckunterschied am Beschränkungsteil (18) erzeugt wird, der infolge der Tatsache auftritt, dass ein zweiter Druck (Pₚ₂) in der zweiten Kammer (Vₚ₂) deutlich geringer ist als der Magnetkammerdruck (Pₛ).

8. Druckregler nach Anspruch 7, **dadurch gekennzeichnet, dass** durch das Anordnen einer Feder (19) zwischen dem Beschränkungsteil (18) und dem Magnetanker (13b) ein weiterer Andrückdruck erzeugt werden kann.

9. Druckregler nach einem der vorhergehenden Ansprüche, **dadurch gekennzeichnet, dass** die Verbindung der Magnetkammer (Vₛ) und der ersten Kammer (Vₚ₁) von einer Axialöffnung (13c) verkörpert wird, die sich durch die gesamte Magnetankerstange (13a) erstreckt.

10. Druckregler nach einem der vorhergehenden Ansprüche, **dadurch gekennzeichnet, dass** die Verbindung der Magnetkammer (Vₛ) und der ersten Kammer (Vₚ₁) von einer Axialöffnung (13c) verkörpert wird, die sich nur durch einen ersten Teil der Magnetankerstange (13a) erstreckt, so dass ein zweiter Teil der Magnetankerstange (13a) massiv bleibt, und wobei die Axialöffnung (13c) in Radialöffnungen (13d) endet, die sich zwischen der Öffnung (13c) in der Magnetankerstange (13a) und der Magnetkammer (Vₛ) erstrecken.

11. Druckregler nach Anspruch 10, **dadurch gekennzeichnet, dass** der zweite, massive Teil der Magnetankerstange (13a) dafür angeordnet ist, sich in einem begrenzten Raum zu bewegen, der die Form einer oberen Magnetkammer (Vₛᵤ) über der Magnetankerstange (13a) aufweist und durch das Gehäuse (2) von der Magnetkammer (Vₛ) getrennt ist, so dass eine Dämpfung der Bewegung der Magnetankerstange erreicht wird.

12. Druckregler nach Anspruch 11, **dadurch gekennzeichnet, dass** die obere Magnetkammer (Vₛᵤ) über den ersten Spalt (Cl1) zwischen der Magnetankerstange (13a) und dem Gehäuse (2) mit der Magnetkammer (Vₛ) verbunden ist.

13. Druckregler nach Anspruch 12, **dadurch gekennzeichnet, dass** das Dämpfen der Bewegung der Magnetankerstange infolge der Tatsache erreicht wird, dass das Hydraulikmedium, das von der Magnetankerstange (13a) verdrängt wird, gezwungen wird, durch den ersten Spalt (cl1) und in die Magnetkammer (Vₛ) auszuströmen.

14. Druckregler nach einem der Ansprüche 1 bis 13, **dadurch gekennzeichnet, dass** der Druckregler einen Hauptdruck (Pp) regelt, der einen Dämpfungsmedium-Hauptstrom über ein Hauptventil in ein Stoßdämpferventil bestimmt.

15. Druckregler nach Anspruch 14, **dadurch gekennzeichnet, dass** das Hauptventil einen Hauptinnenring (9) umfasst, der dafür angeordnet ist, sich im Verhältnis zu einem Hauptsitz (11) entgegen der Wirkung mindestens einer ersten Hauptventilfeder (10a) und dem durch den Druckregler bestimmten Hauptdruck (Pp) zu bewegen.

## Revendications

1. Régulateur de pression pour ajuster la pression dans un écoulement hydraulique entre une première et une seconde chambre (Vp1, Vp2), dans lequel la pression est partiellement ou entièrement régulée par excitation d'un solénoïde qui ajuste une position d'un conducteur, ledit conducteur comprenant une armature de solénoïde (13b) disposée autour ou intégrée à une tige d'armature de solénoïde (13a) et pouvant être déplacée de manière axiale à l'intérieur d'une chambre de solénoïde (Vs) dans un boîtier (2), dans lequel la chambre de solénoïde (Vs) est mise sous pression avec une pression de la chambre de solénoïde (Ps) en raison du fait qu'un ou plusieurs trous (13c) de la tige d'armature de solénoïde (13a) relient la première chambre (Vp1) à la chambre de solénoïde (Vs), **caractérisé en ce qu'**une zone de limitation (18) est disposée autour de la tige d'armature de solénoïde (13a) adjacente au boîtier (2), et dans lequel la zone de limitation (18) comporte un troisième espace (cl3) entre son diamètre intérieur (d₁₈ᵢ) et le diamètre extérieur (d1) de la tige d'armature de solénoïde, et un second espace (cl2), supérieur au troisième espace (cl3), entre son diamètre extérieur (d_{18y}) et le boîtier (2), dans lequel le second espace (cl2) correspond à ou est supérieur à un premier espace (cl1) entre le diamètre extérieur (d1) de la tige d'armature de solénoïde (13a) et le boîtier (2), de sorte qu'un certain mouvement radial est permis entre le conducteur et le boîtier (2), au moment même où très peu de fluide d'amortissement s'écoule entre la zone de limitation (18) et la tige d' armature de solénoïde (13a), et **en ce que** la pression de la chambre de solénoïde (Pₛ) dans la chambre de solénoïde (Vₛ) est sensiblement égale à une première pression (Pₚ₁) régnant dans la première chambre (Vₚ₁), en raison du fait que lesdits un ou plusieurs trous (13c) qui sont disposés dans la tige d'armature de solénoïde (13a) et qui relient les chambres (Vₚ₁, Vₛ) ont un diamètre qui permet un écoulement hydraulique sensiblement non perturbé entre les chambres.

2. Régulateur de pression selon la revendication 1, comprenant en outre un cône mobile de manière axiale (4) et un siège (3), dans lequel ledit conducteur est connecté à et ajuste la position dudit cône (4) par rapport audit siège (3).

3. Régulateur de pression selon la revendication 2, dans lequel un jeu (21) est permis entre la tige d'armature de solénoïde (13a) dudit conducteur et le cône (4), ce qui conduit à une absence de transfert de forces latérales du solénoïde sur le boîtier de soupape (2).

4. Régulateur de pression selon la revendication 2 ou 3, comprenant en outre un ressort élastique (6) disposé entre ledit cône (4) et ledit siège (3), dans lequel un trou (16) de diamètre dₕ est disposé au centre dudit ressort élastique (6), lequel trou permettant qu'un fluide d'amortissement puisse s'écouler à travers le trou axial (13c) de la tige d'armature de solénoïde (13a) avec peu ou pas de restriction.

5. Régulateur de pression selon l'une quelconque des revendications précédentes, **caractérisé en ce que** le troisième espace (cl3) est aussi petit que possible du point de vue fabrication et a de préférence une taille comprise entre un espace maximal égal à 6/1000 et un espace minimum égal à 1/1000 du diamètre extérieur (d1) de la tige de solénoïde (13a).

6. Régulateur de pression selon l'une quelconque des revendications précédentes, **caractérisé en ce que** la zone de limitation (18) prend appui contre le boîtier (2) et la surface de contact entre le boîtier (2) et la zone de limitation (18) est maintenue fermée et scellée, indépendamment de la situation de fonctionnement, en raison du fait qu'une pression de la chambre de solénoïde (Ps) agit dans la chambre de solénoïde (Vs) et crée une force qui presse la zone de limitation (18) contre le boîtier (2).

7. Régulateur de pression selon la revendication 6, **caractérisé en ce que** la force de pression exercée sur la zone de limitation (18) est créée par une différence de pression sur la zone de limitation (18), qui découle du fait qu'une seconde pression (Pₚ₂) dans la seconde chambre (Vₚ₂) est significativement réduite par rapport à la pression de la chambre de solénoïde (Pₛ).

8. Régulateur de pression selon la revendication 7, **caractérisé en ce qu'**une pression supplémentaire de pressage peut être créée par l'agencement d'un ressort (19) entre la zone de limitation (18) et le corps de l'armature de solénoïde (13b).

9. Régulateur de pression selon l'une quelconque des revendications précédentes, **caractérisé en ce que** la connexion de la chambre de solénoïde (Vₛ) et de la première chambre (Vₚ₁) est réalisée par un trou axial (13c) s'étendant à travers la totalité de la tige d'armature de solénoïde (13a).

10. Régulateur de pression selon l'une quelconque des revendications précédentes, **caractérisé en ce que** la connexion de la chambre de solénoïde (Vₛ) et de la première chambre (Vₚ₁) est réalisée par un trou axial (13c) s'étendant à travers une première partie de la tige d'armature de solénoïde (13a), de telle sorte qu'une seconde partie de la tige d'armature de solénoïde (13a) reste solide, et dans lequel le trou axial (13c) se termine dans des trous radiaux (13d) s'étendant entre le trou (13c) dans la tige d'armature de solénoïde (13a) et la chambre de solénoïde (Vₛ).

11. Régulateur de pression selon la revendication 10, **caractérisé en ce que** la deuxième partie solide de la tige d'armature de solénoïde (13a) est agencée pour se déplacer dans un espace limité sous la forme d'une chambre de solénoïde supérieure (Vₛᵤ) au-dessus de la tige d'armature de solénoïde (13a) et est divisée hors de la chambre de solénoïde (Vₛ) par le boîtier (2), de sorte qu'un amortissement du mouvement de la tige d'armature de solénoïde est obtenu.

12. Régulateur de pression selon la revendication 11, **caractérisé en ce que** la chambre de solénoïde supérieure (Vₛᵤ) est reliée à la chambre de solénoïde (Vₛ) via le premier écart (Cl1) entre la tige d'armature de solénoïde (13a) et le boîtier (2).

13. Régulateur de pression selon la revendication 12, **caractérisé en ce que** l'amortissement de la tige d'armature de solénoïde est obtenue en raison du fait que le fluide hydraulique qui est dissipé par la tige d'armature de solénoïde (13a) est forcé de s'écouler à travers le premier écart (cl1) et hors de la chambre de solénoïde (Vs).

14. Régulateur de pression selon l'une quelconque des revendications 1-13, **caractérisé en ce que** le régulateur de pression régule une pression pilote (Pp) qui détermine un principal écoulement de fluide d'amortissement sur une valve principale dans une valve amortisseuse.

15. Régulateur de pression selon la revendication 14, **caractérisé en ce que** la principale valve comprend un cône principal (9), qui est agencé pour se déplacer de manière axiale par rapport à un siège principal (11) en totale opposition à l'action d'au moins un premier ressort de la valve principale (10a) et la pression pilote (Pp) déterminée par la pression régulée.
